# EUROPEAN PATENT SPECIFICATION

(11) **EP 1 764 296 B1**
(45) Date of publication and mention of the grant of the patent: **30.05.2012**
(21) Application number: 05425647.4
(22) Date of filing: 15.09.2005
(51) Int. Cl.: B62M 9/10, F16H 55/30

(54) **Toothed wheel of a bicycle drivetrain**
Zahnrad von einem Fahrrad-Antriebsstrang
Pignon de cycle d'une chaîne de traction de bicyclette

(43) Date of publication of application: 21.03.2007
(73) Proprietor: Campagnolo S.r.l., 36100 Vicenza (VI) (IT)
(72) Inventor: Meggiolan, Mario, 36051 Creazzo (Vicenza) (IT)
(74) Representative: Checcacci, Giorgio

(56) References cited:
- EP-A- 0 945 335
- EP-A1- 0 396 091
- EP-A1- 0 474 139
- EP-A1- 0 538 780
- EP-A1- 0 561 380
- EP-A2- 0 144 984
- EP-A2- 1 167 174
- EP-A2- 1 431 172
- US-A- 3 654 814
- US-A- 4 198 876
- US-A- 5 458 543
- US-A- 5 464 373
- US-A- 5 609 536
- US-A- 5 716 297
- US-A- 5 876 296
- US-A- 5 935 033
- US-A- 6 007 442
- US-A- 6 139 456
- US-A1- 2004 043 855
- US-B1- 6 340 338

## Description

The present invention refers to a toothed wheel of a bicycle drivetrain. By the term toothed wheel here and hereafter both a crown of a crankset of a front gearshift group, and a sprocket of a rear gearshift group are meant; the crowns are normally two or three in number, whereas the sprockets are normally from five to ten in number. Hereafter, reference shall be made in particular to a sprocket, but what has been described and illustrated must equally be considered valid for a crown.

A toothed wheel of a bicycle drivetrain normally is flat shaped, delimited between two opposite sides; hereafter, the side facing towards another toothed wheel of smaller diameter shall be called outer side, whereas the face facing towards a toothed wheel of greater diameter shall be called inner side. It should be noted that a sprocket assembly is normally mounted with the toothed wheels of smaller diameter towards the outside of the bicycle wheel and therefore the outer side of the sprocket as defined above is actually the side that faces towards the outside of the bicycle wheel; vice-versa, a crankset is normally mounted with the toothed wheels of greater diameter towards the outside of the bottom bracket and therefore the inner side of the crown is normally the side that faces towards the outside of the bottom bracket.

In the toothed wheel it is possible to define a central portion surrounded by a peripheral portion; the central portion comprises the means for anchoring the toothed wheel in its operating position in the sprocket assembly or in the crankset, whereas the peripheral portion comprises a plurality of teeth intended to engage with a chain of the bicycle drivetrain.

During riding, the chain is moved from one crown to another or from one sprocket to another according to the cyclist's needs. For such a purpose, the bicycle is provided with a front gearshift group associated with the crankset and a rear gearshift group associated with the sprocket assembly. In both cases, the gearshift group comprises a derailleur that engages the transmission chain moving it on toothed wheels of different diameter and having a different number of teeth, so as to obtain different transmission ratios. The derailleur, be it that of the rear gearshift group or that of the front gearshift group, is moved in one direction by the traction action exerted by an inextensible cable that is normally sheathed (commonly known as Bowden cable), in the opposite direction by the elastic return action of a spring provided in the gearshift itself.

Normally, the direction in which the movement is determined by the return spring is that in which the chain passes from a toothed wheel of greater diameter to a toothed wheel of smaller diameter, i.e. that of so-called downward gearshifting; vice-versa, the traction action of the control cable takes place in the direction of so-called upward gearshifting, wherein the chain moves from a toothed wheel with a smaller diameter to a toothed wheel with a larger diameter. It should be noted that with reference to the crankset downward gearshifting corresponds to a lower transmission ratio, whereas with reference to the sprocket assembly it corresponds to the passage to a greater transmission ratio.

According to the prior art, to assist the movement of the chain between different toothed wheels (upward and downward gearshifting), the toothed wheels themselves are suitably shaped and have recesses on the sides and bevellings on the teeth. The recesses are normally depression zones made on the outer side through a reduction of its thickness in the direction of the middle plane of the toothed wheel itself. The bevellings on the teeth normally consist of localised reductions of the material and involve both the outer side and the inner side of the teeth, from the crest up to near to the bottom of the space defined between two crests of two adjacent teeth.

In known toothed wheels, the bevellings are made on a limited number of teeth of the total number present on the circumference of the toothed wheel and partially involve the tooth along its width, with width being understood to be the circumferential extension of the tooth. This allows almost all of the teeth to be of a sufficient thickness to determine guide surfaces for the links of the chain sufficient to ensure an acceptable stability of the chain on the toothed wheel during pedalling. In particular, such a thickness allows the guiding of the portions of chain consisting of facing pairs of inner links. Such a thickness also coincides with the thickness of the peripheral portion and of the central portion of the toothed wheel.

Document US 3 654 814 discloses a toothed wheel according to the preamble of claim 1.

As for all of the components of a bicycle, there is still a pressing requirement to make toothed wheels (sprockets and crowns) that are as light as possible and that allow the weight of the sprocket assembly and of the crankset to be kept as low as possible, in particular as the number of sprockets or crowns that constitute the sprocket assembly or the crankset increases.

The problem at the basis of the present invention is therefore that of making a toothed wheel of reduced weight with respect to known toothed wheels.

Therefore, the present invention concerns - in a first aspect thereof - a toothed wheel according to claim 1; preferred characteristics are shown In the dependent claims 2 to 12.

In particular and preferably, in accordance with the invention, a toothed wheel is provided having a flat shape between two opposite sides, with a central portion surrounded by a peripheral portion, in which the peripheral portion comprises a plurality of teeth intended for engagement with a chain of the bicycle drivetrain, said peripheral portion comprising at least a sector of neutral teeth that are not specialized for gearshifting, said toothed wheel comprising at least one side projection on at least one of the neutral teeth, projecting with respect to at least one of said sides. The presence of the projection provides the necessary guide for the chain and therefore the stability of the coupling between chain and toothed wheel, without however making the toothed wheel itself heavier with an excessive thickness in all of its parts; in other words, the minimum thickness necessary so that the guiding of the chain takes place in an adequate way is limited to just the zone of the projection, whereas the rest of the toothed wheel can have a smaller thickness. The projection therefore provides a sort of "apparent thickness" for the chain, greater than the real thickness responsible for the weight of the toothed wheel.

Preferably, the entire toothed wheel - both the central portion and the peripheral portion, with the exception of said at least one projection - is delimited on its two side by two parallel planes.

Preferably, the toothed wheel is intended to form part of a group of adjacent toothed wheels; the sides therefore comprise an outer side, intended to face towards a toothed wheel of smaller diameter or else to define the group of toothed wheels towards the outside, and an inner side, intended to face towards a toothed wheel of greater diameter or else to define the group of toothed wheels towards the inside; said at least one projection preferably projects from the outer side.

The number of neutral teeth at which said at least one projection is provided is less than the total number of teeth of the wheel. Indeed, it is not necessary for the function of "apparent thickness" provided by the projections to be present at each tooth, but it is sufficient for it to be provided at some of the teeth so that the chain is guided correctly. Where no projection is provided, preferably the thickness of the toothed wheel is minimal, and even if it were per se insufficient to provide the guiding of the chain, the presence of the projections at the other teeth ensures correct operation.

At each tooth many projections can be provided, but preferably at most one is provided. Indeed, forming many projections would make manufacturing more complex and expensive, without nevertheless giving significant functional advantages.

Each of the aforementioned projections can be formed on the toothed wheel in various ways. Preferably, said at least one projection is obtained through displacement of material of the peripheral portion of the toothed wheel; such displacement is carried out for example and preferably through coining, embossing or similar operation. This method is preferred both because it is constructively simple, and because it allows the weight of the toothed wheel to be further reduced due to the lack of material occurring on the side of the toothed wheel, on the opposite side to the projection.

Preferably, the toothed wheel comprises a through opening at said at least one projection, more preferably in the form of a circular cylindrical hole, having its axis parallel to the axis of the toothed wheel. A further lightening of the toothed wheel can thus be achieved. Even more preferably, said at least one projection is obtained by coining (or else embossing or similar) together with said opening, thus without substantial manufacturing complication.

The shape of the projection can be of different types. Preferably, the projection is elongated in shape, with a greater extension in the radial direction than in the circumferential direction. A certain extension in the radial direction is used to ensure the best guide to the chain, whereas in the circumferential direction an even minimal extension is sufficient.

Preferably, the projection comprises a first radially inner portion, a second radially outer portion having a smaller circumferential size than the radially inner portion, and a through hole formed in the radially inner portion, said hole having a circular cylindrical shape with axis parallel to the axis of the toothed wheel. This configuration is advantageous because it allows the rigidity of the tooth to be increased, in particular when the first and second portion are obtained by coining (or similar) since a ribbing is formed that, as known, allows the rigidity of the material to be increased opposing the bending of the tooth. Moreover, such a configuration advantageously allows the through opening to be made in the second portion that is subject to less stresses with respect to the first portion. The first portion remains substantially integral.

Preferably, the projection is fitted to the side of the toothed wheel through a peripheral bevelling; the bevelling is useful for having as homogeneous as possible distribution of the mechanical stresses in the material of the toothed wheel, and also promotes a contact without jamming with the parts of the chain.

A wheel having a projection in accordance with the invention, as stated, advantageously allows the lack of material in the vicinity of the projection to be useful to ease the gearshifting operations in a group of many toothed wheels (sprocket assembly or crankset).

In further aspects thereof the invention concerns a sprocket assembly according to claim 13, a crankset according to claim 14, a gearshift group according to claim 15 and a bicycle drivetrain according to claim 16.

Further characteristics and advantages of the present invention shall become clearer from the following detailed description of some preferred embodiments thereof, made with reference to the attached drawings. In such drawings:
- fig. 1 is a front plan view of a sprocket assembly for a bicycle comprising toothed wheels according to the invention;
- fig. 2 is a front plan view of a pair of toothed wheels of the sprocket assembly of fig. 1;
- fig. 3 is a front plan view of a toothed wheel of the pair of fig. 2;
- fig. 4 is a view from above of the toothed wheel of fig. 3;
- fig. 5 is a rear plan view of the toothed wheel of fig. 3;
- fig. 6 is an enlarged view of a detail of the toothed wheel of fig. 3;
- figures 7 to 14 are section views of the toothed wheel of fig. 6 along respective section planes G-G, H-H, J-J, K-K, L-L, M-M, N-N, P-P of fig. 6;
- fig. 15 is a view of an enlarged detail of fig. 6;
- fig. 16 is a section view along the plane Q-Q of fig. 15;
- fig. 17 is a view from above of a detail of the toothed wheel of fig. 3 with the chain engaged;
- fig. 18 is a view from above of the pair of toothed wheels of fig. 2 with the chain in a first gearshifting condition;
- fig. 19 is an axonometric view of the pair of toothed wheels of fig. 18 with the chain in the first gearshifting condition;
- fig. 20 is a view from above of the pair of toothed wheels of fig. 2 with the chain in a second gearshifting condition;
- fig. 21 is an axonometric view of the pair of toothed wheels of fig. 20 with the chain in the second gearshifting condition;
- fig. 22 is a front plan view of a second pair of toothed wheels of the sprocket assembly of fig. 1;
- fig. 23 is a front plan view of a toothed wheel of the pair of fig. 22;
- fig. 24 is an enlarged view of a detail of fig. 23;
- fig. 25 is a section view of the toothed wheel of fig. 23, along the section plane T-T;
- fig. 26 is a view from above of the pair of toothed wheels of fig. 22 with the chain in a first gearshifting condition;
- fig. 27 is an axonometric view of the pair of toothed wheels of fig. 26 with the chain in the first gearshifting condition;
- fig. 28 is a view from above of the pair of toothed wheels of fig. 22 with the chain in a second gearshifting condition;
- fig. 29 is an axonometric view of the pair of toothed wheels of fig. 28 with the chain in the second gearshifting condition;
- fig. 30 is a view of a variant of the detail of fig. 15.

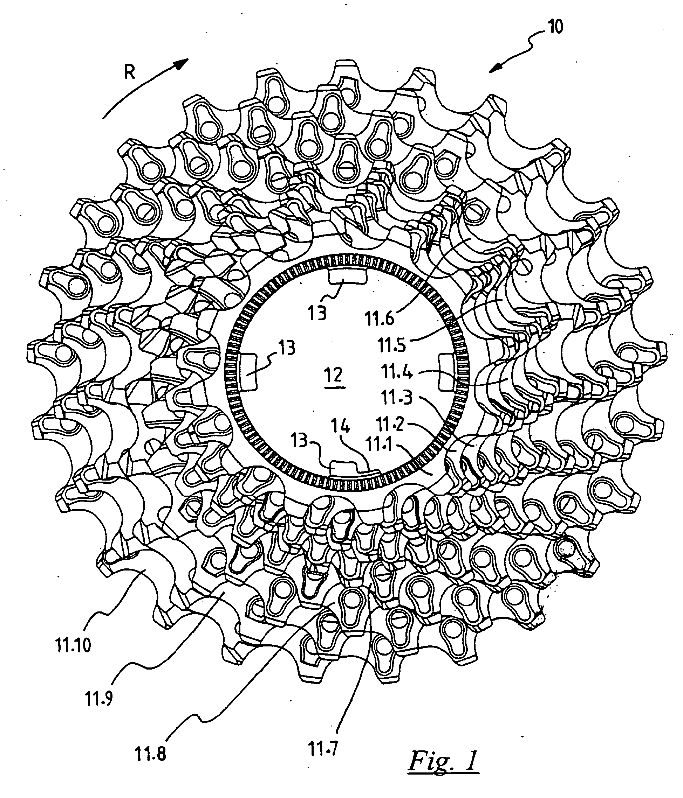

In fig. 1 a group of toothed wheels formed by a sprocket assembly is represented, generally indicated with 10, which comprises ten side-by-side coaxial sprockets (generally indicated with 11 or else specifically with 11.1-11.10) having, from the smallest to the largest, an increasing number of teeth according to the following sequence: 12, 13, 14, 15, 16, 17, 19, 21, 23, 25.

From the first sprocket 11.1 with 12 teeth to the sixth sprocket 11.6 with 17 teeth, the increase in teeth from one sprocket to the next is by one tooth, commonly known as skip one (symbolically Δ1), whereas from the sixth sprocket 11.6 with 17 teeth to the tenth sprocket 11.10 with 25 teeth the increase in teeth from one sprocket to the next is by two teeth, commonly known as skip two (symbolically Δ2).

The sprocket assembly 10 is intended for assembly on a sprocket holding body, not shown in the figures, belonging to a free wheel mechanism associated with the rear wheel of a bicycle. The sprockets 11 are each provided with a central through hole 12 through which they are coupled on the outer surface of the sprocket holding body. To ensure locking against rotation of each sprocket 11 on the sprocket holding body, according to a common technique in the field, projecting fins 13 that match with respective and corresponding grooves of the sprocket holding body are formed on the central hole 12 of each sprocket 11. To ensure then the desired angular phasing between the various sprockets 11, the fins 13 comprise a key 14, formed by an indentation in one of the fins 13. The phasing allows two adjacent sprockets to be positioned in a relative predetermined angular position to assist, in particular, the passage of the chain K from one sprocket 11 of smaller diameter to an adjacent sprocket of greater diameter (upward gearshifting).

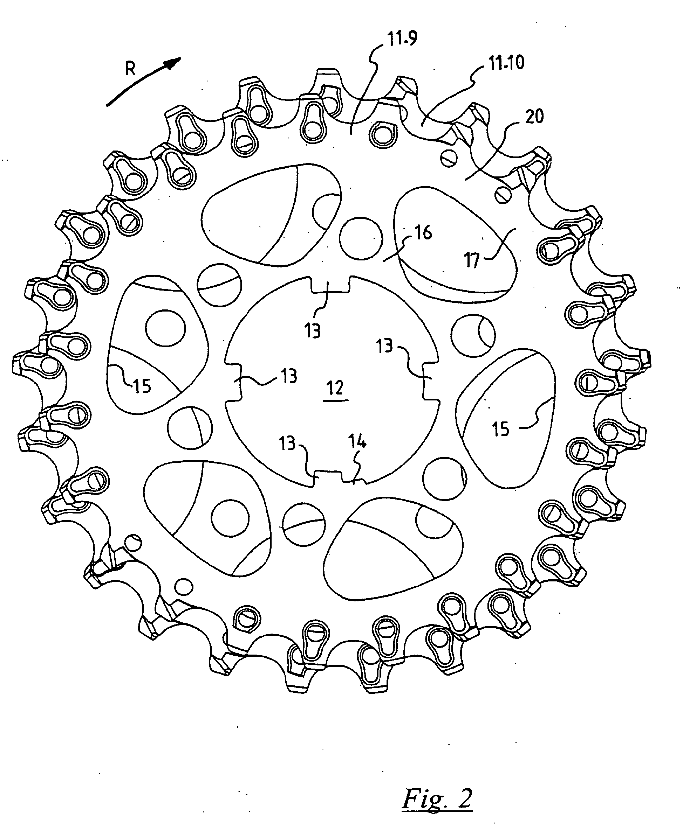

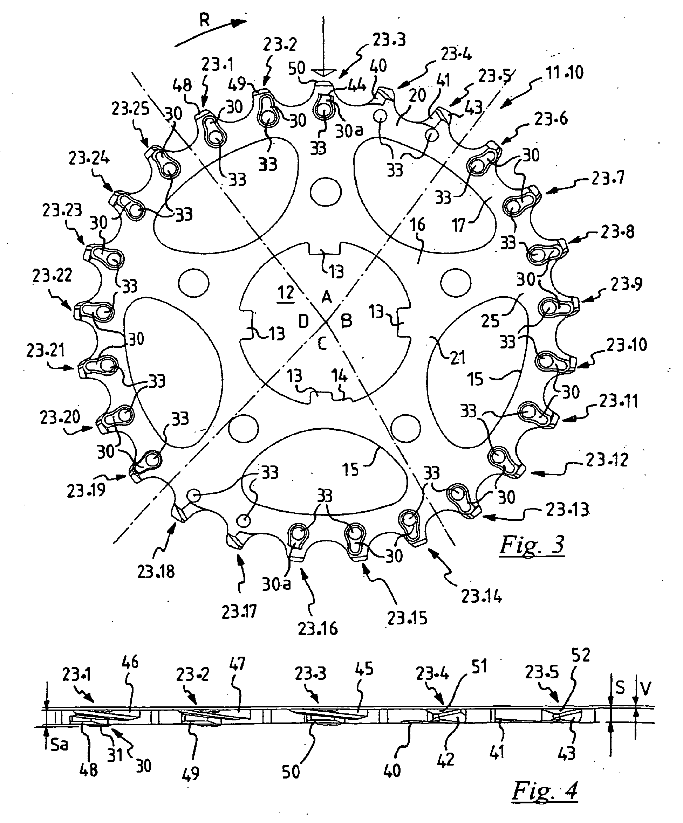

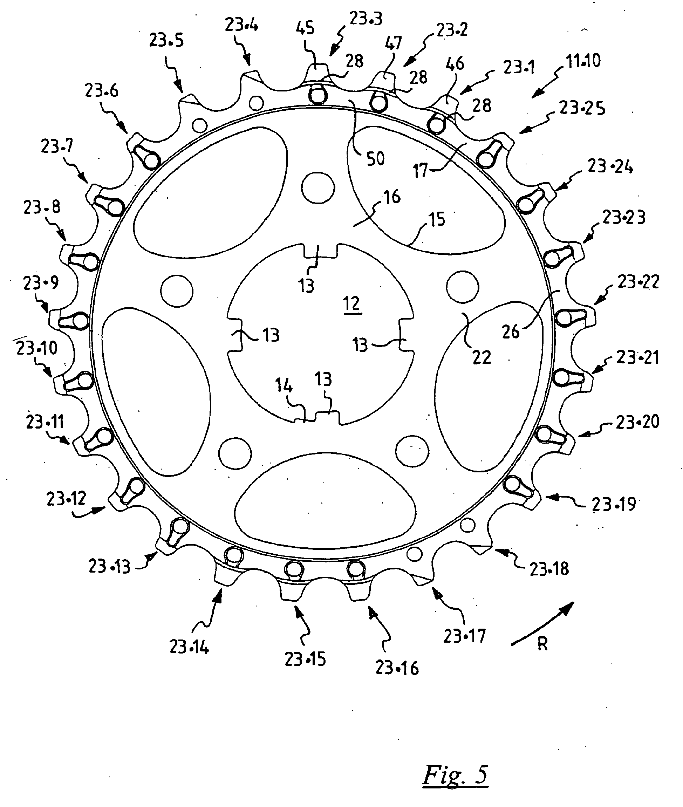

In fig. 2 the pair of sprockets 11.9, 11.10 with skip two is represented having, respectively, 23 and 25 teeth and arranged according to the desired angular phasing. Figures 3 to 15 show just the sprocket 11.10 of greater diameter of the pair with skip two of fig. 2, i.e. the sprocket with 25 teeth. In the sprocket assembly represented here, the four sprockets 11.7-11.10 with 19, 21, 23 and 25 teeth, i.e. the sprockets of greater diameter with skip two, are substantially the same as each other, except for the different diameter and number of teeth. 25 teeth, i.e. the sprockets of greater diameter with skip two, are substantially the same as each other, except for the different diameter and number of teeth. The description shall be made, therefore, just for the represented sprocket 11.10 with 25 teeth, meaning that this is also valid for the other sprockets.

The sprocket 11.10 comprises a central portion 16 and a substantially annular peripheral portion 17, which surrounds the central portion 16.

In the central portion 16 the central hole 12 is formed with the fins 13; moreover, the central portion 16 is provided with some lightening openings 15 and has a predetermined thickness S between two opposite sides 18 and 19 of the sprocket 11, outer and inner respectively, formed by respective parallel planes 21 and 22.

The peripheral portion 17 comprises twenty-five teeth (generally indicated with 23 or else specifically with 23.1-23.25) for meshing with the chain K. The peripheral portion 17 is delimited on the two sides 18 and 19 by two parallel planes 25 and 26, outer and inner respectively. The inner plane 26 is lowered by an amount V with respect to the inner plane 22 of the central portion 16 (fig.

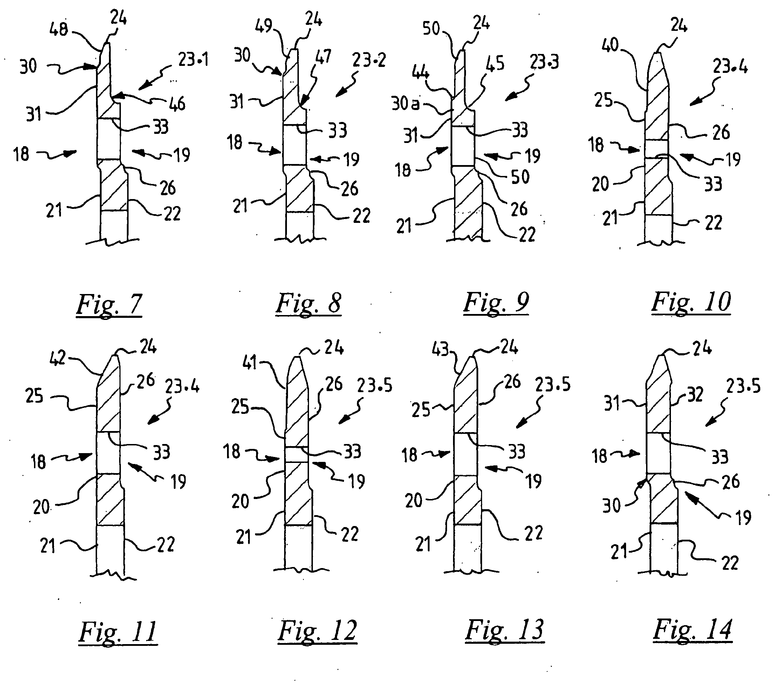

5 and fig. 14 section P-P), for example through turning or other mechanical processing. Such lowering allows the sides 18 and 19 of the adjacent sprockets 11 to be better spaced apart, increasing the distance between the inner plane 26 of the teeth 23 of a sprocket 11 with respect to the outer plane of the teeth 23 of the adjacent sprocket 11. This avoids the chain K interfering against the adjacent sprockets 11 during the rotation of the sprocket assembly 10.

The twenty-five teeth 23 are grouped in four sectors A, B, C, D in which:
- the sectors A and C, identical to each other, each comprise five specialised teeth (23.1-23.5 and 23.14-23.18) for upward gearshifting;
- the sector B comprises eight unspecialised or neutral teeth 23.6-23.13;
- the sector D comprises seven unspecialised or neutral teeth 23.19-23.25.

As can be seen in figure 3, all of the teeth 23 of the sprocket 11.10, except for two teeth 23.4, 23.5 of the sector A and two teeth 23.17, 23.18 of the sector C, are provided with a projection 30 projecting sideways with respect to the outer plane 25 of the peripheral portion 17 of the sprocket 11.10 itself. The projection 30 defines a projecting outer surface 31 substantially parallel to the surface of centre of the sprocket 11.10 and its dimension in the circumferential direction increases approaching the centre of the sprocket 11.10, assuming an approximately pear-like shape, with rounded contour having zones with convex curvature alternating with zones with concave curvature; in this way, the projection 30 comprises a radially inner portion 34 with a greater size in the circumferential direction than a radially outer portion 35. Moreover, the projection 30 comprises a peripheral bevelling 36 that surrounds it.

The projection 30 is obtained, preferably, by displacement of the material (coining) of the peripheral portion 17 towards the outside, as can be seen in particular in fig. 14 with reference to the section of the neutral tooth 23.25; advantageously, the projection 30 is thus obtained without addition of material, and therefore without increasing the weight of the peripheral portion 17 itself.

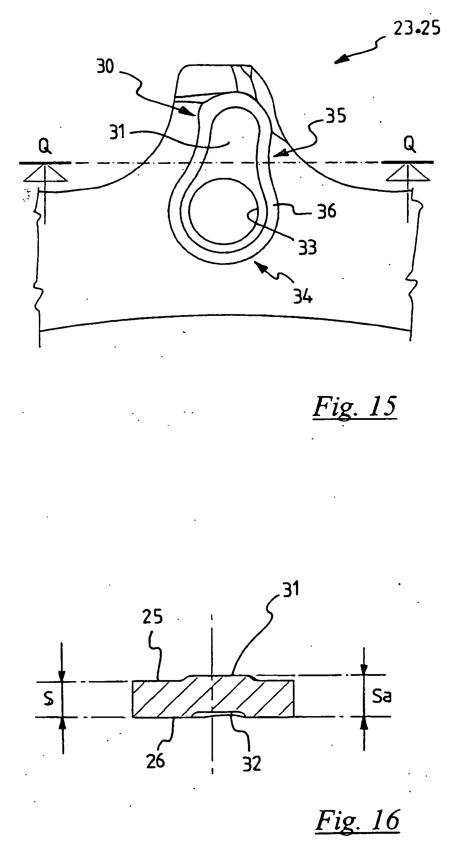

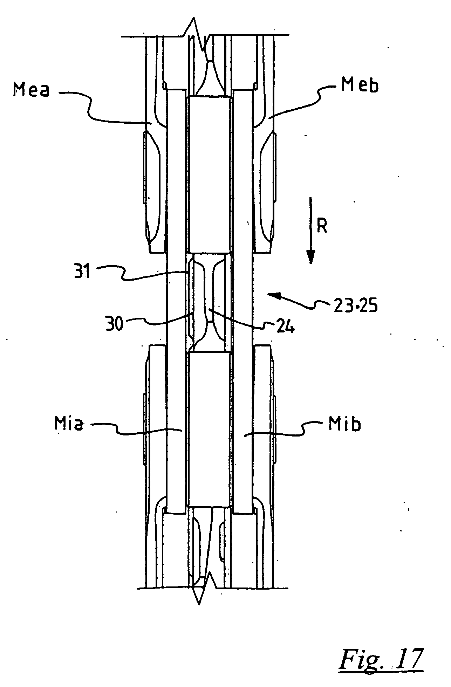

The neutral tooth 23.25 is therefore of variable thickness and, as can be seen in the detail of fig. 16, situated between the projecting outer surface 31 of the projection 30 and the inner plane 26 of the peripheral portion 17. Between the surface 31 and the plane 26 an apparent thickness indicated with Sa of the tooth 23.25 is thus defined. Indeed, the surface 31 and the plane 26 define the guide for the chain K, in particular for the facing inner pairs of links Mia, Mib (fig. 17) that are connected through pins to the facing outer pairs of links Mea, Meb thus forming respective portions of the chain K. The inner plane 26 of the neutral tooth 23.25 has a recessed central zone 32, a consequence of the cited coining process (as can be seen in fig. 16). Consequently, the thickness value necessary for the specific chain K used is Sa and not S.

Advantageously, therefore, the teeth 23, the peripheral portion 17 and the central portion 16 of the sprocket 11 do not consist of a body having the same thickness Sa all over, as occurs for the prior art; the apparent thickness Sa necessary for the guiding of the chain K is limited at most to the zones in which the projections 30 are provided whereas elsewhere the thickness is smaller, with consequent reduction in the weight of the sprocket 11 itself. Indeed, if the projections 30 are obtained by displacement of material as indicated in the example, the real thickness S of the sprocket 11 is less than Sa all over.

In variant embodiments, the inner plane 26 of the peripheral portion 17 could be flat and not have the recessed central zone 32 of the projection 30 (providing other types of process different to coining, for example starting from a sprocket of greater thickness and removing material on the outer side 18 apart from at the projections 30).

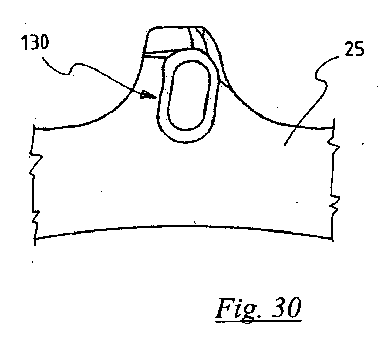

Equally, the projecting outer surface 31 of the projection 30 could have a different shape and engage the tooth 23 and the outer plane 25 of the peripheral portion 17 of the sprocket 11 with different geometries. In figure 30, for example, a projection is shown, indicated with 130, according to a shape variant with respect to the projection 30. With respect to the projection 30, the projection 130 has a simpler rounded shape, without zones with concave curvature and without a differentiation between a radially inner portion and a radially outer portion.

In each tooth 23, at each projection 30, a through hole 33 for further lightening is made. The through hole 33 creates a cylindrical surface parallel to the axis of the sprocket 11; such a surface, following the hardening treatments to which the surfaces of the sprocket 11 are subjected (for example cementation), allows the structural strength of the sprocket 11 to be increased in its axial direction.

The outer plane 25 of the peripheral portion 17 where there are no projections 30 is aligned with the outer plane 21 of the central portion 16 (figs. 10-13).

As stated above, on the sprocket 11.10 two sectors A and C are defined provided with specialised teeth 23.1-23.5 and 23.14-23.18; such sectors A and C define two zones inside a round angle in which the lifting of the chain K from the immediately adjacent sprocket 11.9 of smaller diameter (i.e. upward gearshifting towards the sprocket 11.10) is made easier.

It should be noted that, in a simplified variant embodiment, a sprocket 11 (for example the sprocket 11.1 of minimum diameter, towards which no upward gearshifting is possible) could lack facilitation sectors and in such a case each tooth 23 of such a sprocket 11 could be of the neutral type described above.

Hereafter, reference shall be made to the five specialised teeth 23.1-23.5 of the sector A, being the same as those of the sector C. Moreover, the terms "rear" or "next" and "front" or "preceding" shall be used with reference to the normal direction of rotation, indicated with R, i.e. the direction defined by the rotation of the sprocket assembly 10 during pedalling forwards.

At the specialised teeth 23.5 and 23.4 the outer plane 25 of the peripheral portion 17 of the sprocket 11.10 is without the projection 30 and thus comprises a front area 20 with respect to the tooth 23.3, which is substantially flat and without recesses, aligned with the outer plane 21 of the central portion 16 (as can be seen in particular in figs. 11 and 13 - sections N-N and L-L). Such an area 20 without any projection makes a part on the peripheral portion 17 for facilitating upward gearshifting when the chain K is pushed by the rear derailleur from the sprocket 11.9 towards the sprocket 11.10, as shall be seen more clearly hereafter.

On the outer side 18 of the tooth 23.4 and of the tooth 23.5 respective first outer bevellings 40, 41 are formed defined by oblique surfaces that approach the middle plane of the sprocket 11.10 proceeding in the direction opposite the normal direction of rotation R. Such first outer bevellings 40 and 41 involve about half of the tooth 23.4, 23.5 starting from its centre going towards the rear zone thereof. The first outer bevelling 41 of the tooth 23.5 is slightly more accentuated than the first outer bevelling 40 of the tooth 23.4 (see fig. 4).

Again on the outer sides 18 of the teeth 23.4 and 23.5 respective second outer bevellings 42, 43 are formed that involve the tooth 23.4 and 23.5 towards the respective crest 24 and give the crest 24 of the tooth, as can be seen in fig. 14, an inclined progression with respect to the middle plane of the sprocket 11.10. Such second outer bevellings 42, 43 are defined by oblique surfaces that approach the middle plane of the sprocket 11.10 going in the normal direction of rotation R.

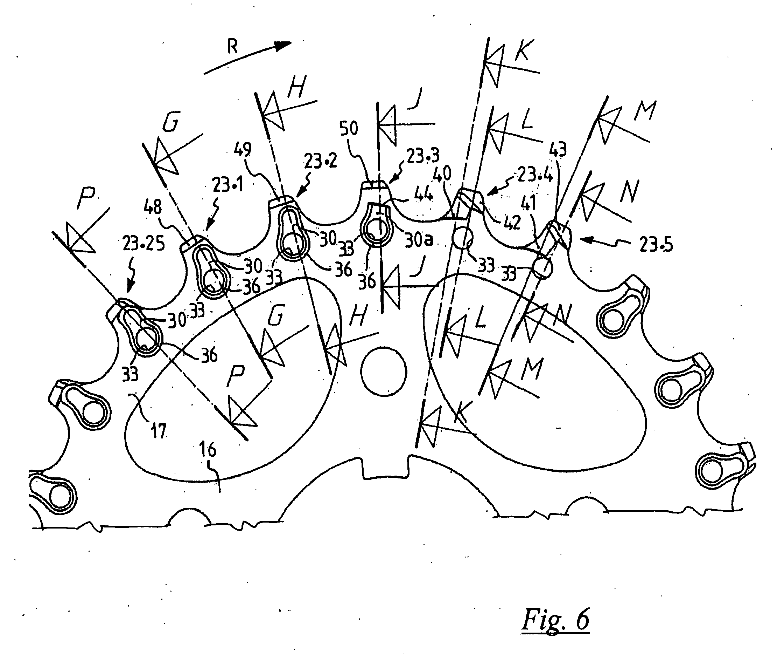

The tooth 23.3 is provided with a projecting projection 30a, similar to the projections 30 described above but truncated at the top, towards the crest 24 of the tooth 23.3, by a slightly inclined edge 44 (see in fig. 6 and section J-J of fig. 9), with a progression that goes away from the centre of the sprocket 11.10 going in the direction opposite the advancing direction R.

On the inner side 19, the tooth 23.3 is provided with an inner bevelling 45 defined by an oblique surface that approaches the middle plane of the sprocket 11.10 going in the normal direction of rotation R, and which extends between the crest 24 of the tooth 23.3 and a chord 28 close to the base of the tooth itself.

The teeth 23.1, 23.2 are also provided, on the inner side 19, with respective inner bevellings 46, 47; the depth with respect to the middle plane of the sprocket 11.10 of each of the inner bevellings 45, 47 and 46 of the respective teeth 23.3, 23.2 and 23.1 is less than that of the bevelling of the previous tooth, with respect to the direction R. In variant embodiments, however, the depths of the bevellings 45, 46 and 47 can be the same.

The bevellings 45, 46 and 47 of the teeth 23.3, 23.2 and 23.1 together make a depression zone on the inner side 19 of the sprocket 11.10.

On the inner side 19, around the tooth 23.3, the peripheral portion 17 of the sprocket 11.10 comprises an area 50 outside of the teeth 23 that is substantially flat, without any recess.

Moreover, the specialised teeth 23.1-23.5 are provided with apical bevellings at their own crest 24; in particular, the tooth 23.1 comprises an apical bevelling 48 on the outer side 18, the tooth 23.2 comprises an apical bevelling 49 on the outer side 18, the tooth 23.3 comprises an apical bevelling 50 on the outer side 18, the tooth 23.4 comprises an apical bevelling 51 on the inner side 19, and the tooth 23.5 comprises an apical bevelling 52 on the inner side 19.

The functions of the five specialised teeth 23.1-23.5 and of the respective bevellings and edges 40-46 are described hereafter with reference to two upward gearshifting conditions of the chain K from the sprocket 11.9 with 23 teeth to the sprocket 11.10 with 25 teeth. The two gearshifting conditions correspond to the two different situations that can be created during gearshifting with reference to the position of the chain K with respect to the sprocket of smaller diameter 11.9, i.e. either if, considering the same tooth 23 of such a sprocket 11.9, it is engaged by a portion of chain K defined by two of its facing inner links or on the other hand if it is engaged by a portion of chain K defined by two of its facing outer links.

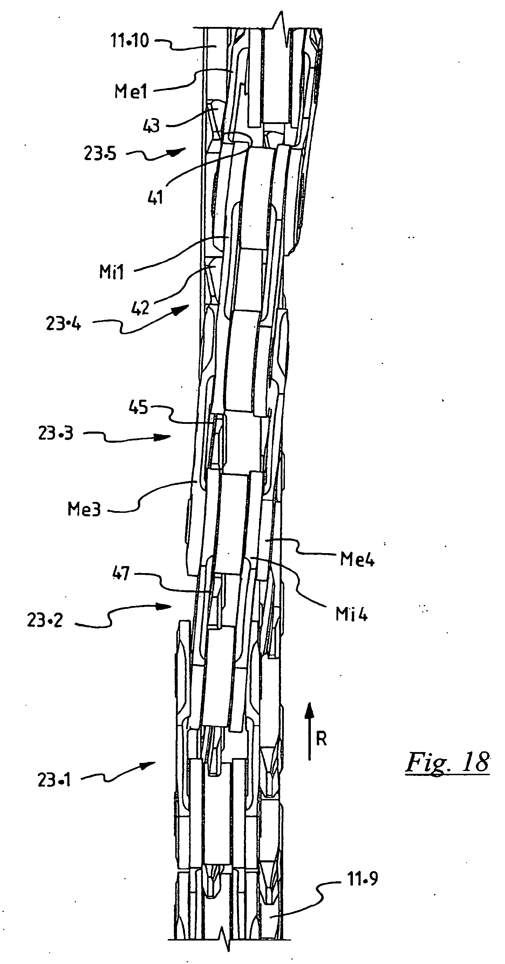

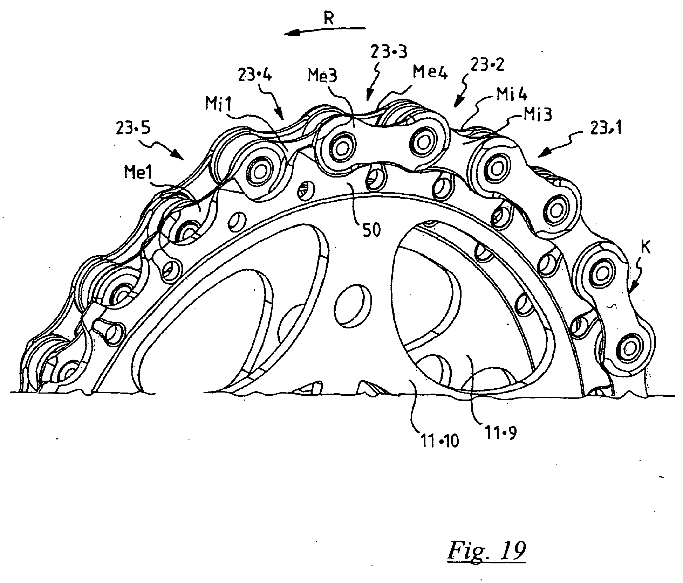

The first gearshifting condition of the two cited conditions, in which the chain K leaves the sprocket 11.9 with 23 teeth to engages the sprocket 11.10 with 25 teeth, is shown in figs. 18 and 19.

The outer link Me1 of the chain K makes contact with the flat area 20 of the peripheral portion 17 below the tooth 23.5 and rests on its first outer bevelling 41. The second outer bevelling 43 of the tooth 23.5 makes the outer link Me1 of the chain K slide, preventing it engaging with the tooth 23.5 itself (therefore this is substantially a refusal bevelling). The inner link Mi1 makes contact with the tooth 23.4 and rests on its first outer bevelling 40. The tooth 23.3 is engaged by the portion of chain K formed by the two outer links Me3 and Me4 and the outer link Me3 rests upon the inner bevelling 45 of the tooth 23.3.

The tooth 23.2 is engaged by the portion of chain K formed by the two inner links Mi3 and Mi4 and the inner link Mi3 rests upon the inner bevelling 47 of the tooth 23.2.

The fifth specialised tooth 23.1 is not substantially involved in this gearshifting.

It should be noted that the various previous indications Mix and Mex are meant with reference to the gearshifting position illustrated and do not therefore indicate the specific links of the chain K. The same indications shall also be used hereafter to illustrate other gearshifting conditions, without this meaning that reference is made to the same links of the chain K.

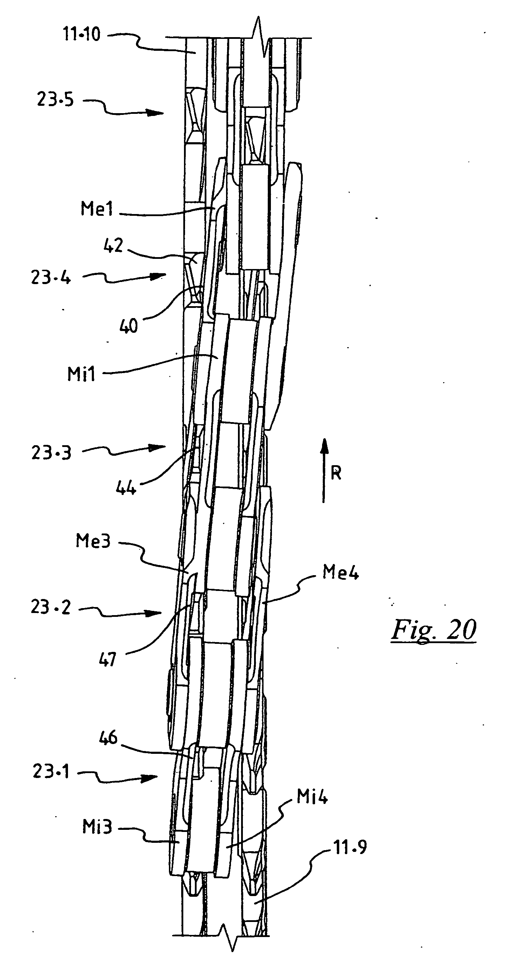

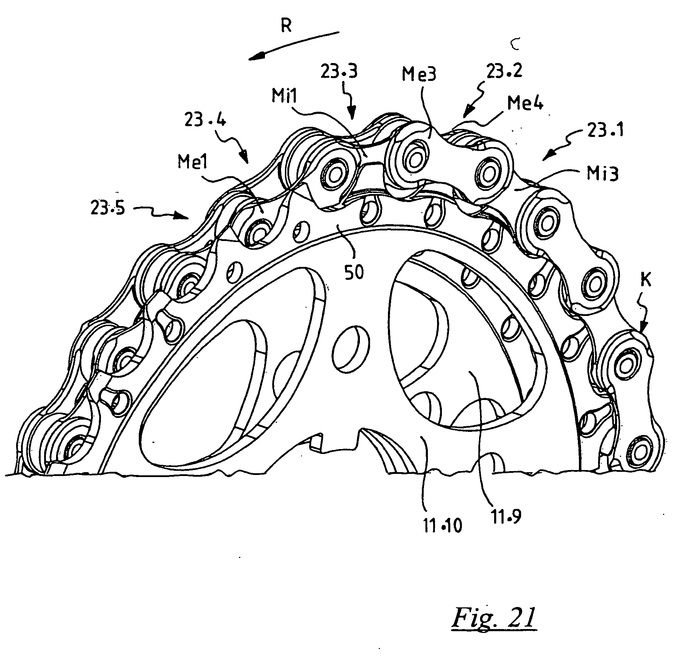

The second gearshifting condition of the two conditions cited above is shown in figs. 20 and 21.

The outer link Me1 of the chain K makes contact with the flat area 20 of the peripheral portion 17 below the tooth 23.4 and rests upon its first outer bevelling 40. The second outer bevelling 42 of the tooth 23.4 makes the outer link Me1 of the chain K slide, preventing it engaging with the tooth 23.4 itself (therefore this is substantially a refusal bevelling). The inner link Mi1 makes contact with the tooth 23.3 and rests on the edge 44 of the truncated projection 30a. The tooth 23.2 is engaged by the portion of chain K formed by the two outer links Me3 and Me4 and the outer link Me3 rests upon the inner bevelling 47 of the tooth 23.2.

The tooth 23.1 is engaged by the portion of chain K formed by the two inner links Mi3 and Mi4 and the inner link Mi3 rests upon the inner bevelling 46 of the tooth 23.1.

The fifth specialised tooth 23.5 is not substantially involved in this gearshifting.

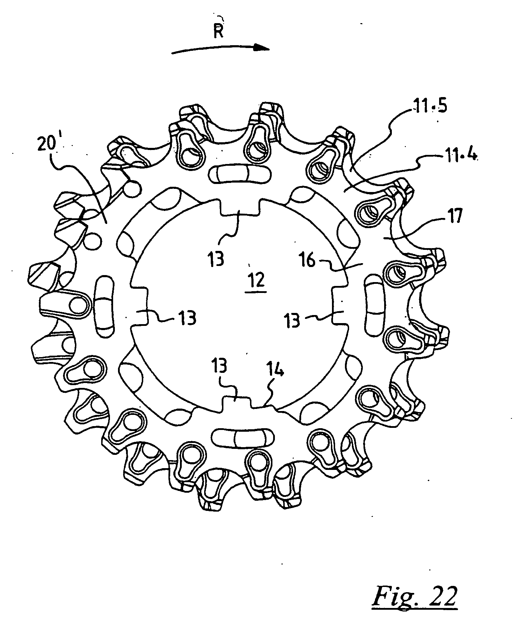

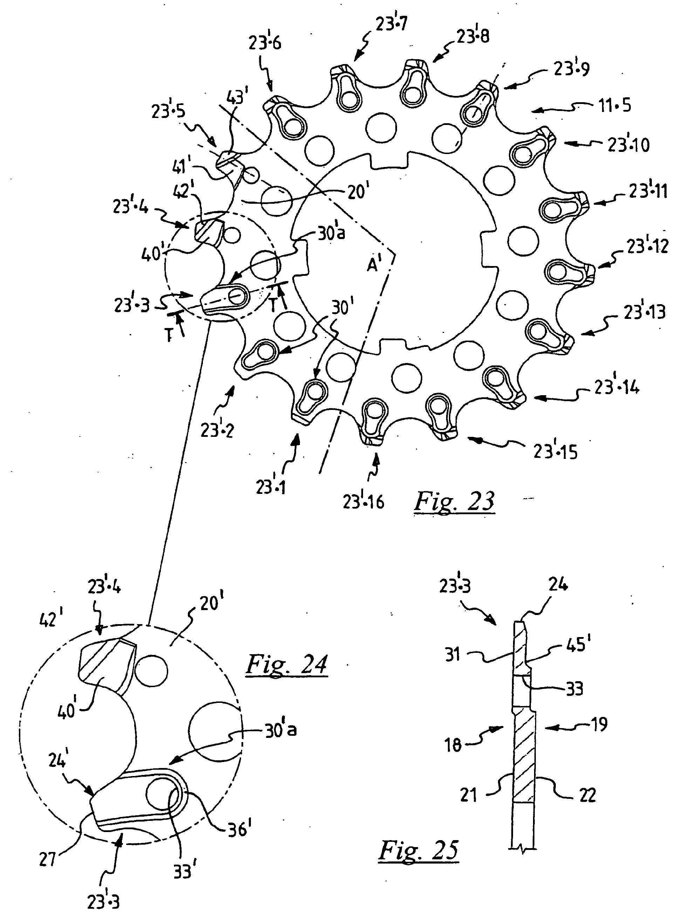

In fig. 22 the pair of sprockets 11.4, 11.5 with skip one is represented having, respectively, 15 and 16 teeth and arranged according to the desired angular phasing. In fig. 23 just the sprocket 11.5 of greater diameter of the pair with skip one of fig. 22, i.e. the sprocket with 16 teeth, is shown. In the sprocket assembly 10 represented here, the five sprockets 11.2-11.6 with 13, 14, 15, 16 and 17 teeth, i.e. the sprockets of greater diameter in a skip one, are substantially the same as each other, apart from the different diameter and number of teeth. The description will be made, therefore, only for the sprocket 11.5 with 16 teeth represented. The sprocket of minimum diameter 11.1 with 12 teeth of the sprocket assembly 10 is, on the other hand, different from the others since it is not subject to being engaged by the chain K in upward gearshifting operations. Such a sprocket 11.1 can therefore also be of known type.

The sprocket 11.5 with 16 teeth differs from the sprocket 11.10 with 25 teeth described above, as well as for the diameter and the number of teeth, in that it has just one sector A' provided with five specialised teeth 23'.1-23'.5 and for the different embodiment of the projection 30'a of the specialised tooth 23'.3. The details of the sprocket 11.5 corresponding to details of the sprocket 11.10 described previously shall not be described in detail and shall be indicated hereafter by the same reference numerals used for the sprocket 11.10, with the addition of an apostrophe (').

The projection 30'a of the specialised tooth 23'.3 of the sprocket 11.5, unlike the truncated projection 30a of the specialised tooth 23.3 of the sprocket 11.10, extends up to the crest 24' of the tooth 23'.3, as can be seen more clearly in the section of fig. 25, determining a support zone 27 on top of the tooth 23'.3 itself.

Such a support zone 27 is used in the gearshifting step that, as shall be illustrated hereafter, in the case of skip one, takes place in a slightly different way compared to the skip two described above, given the smaller difference in diameter of the two sprockets 11.4, 11.5 and their different phasing.

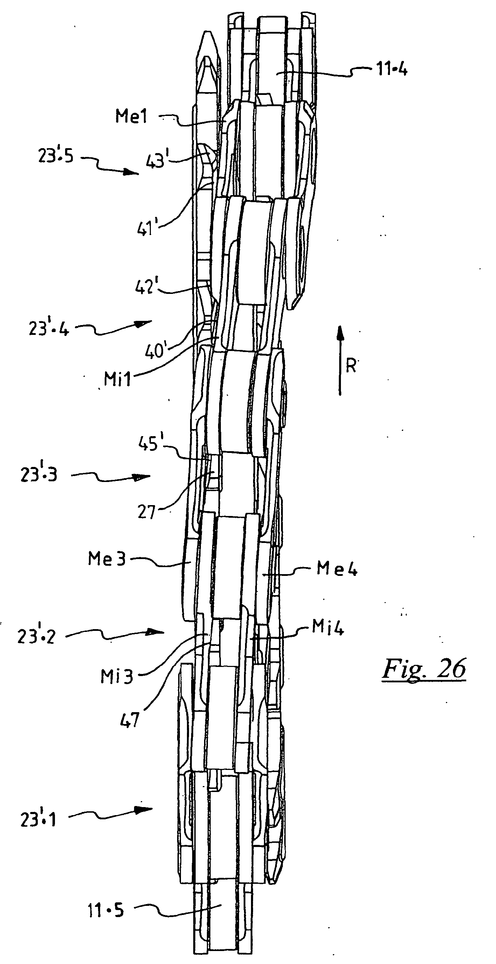

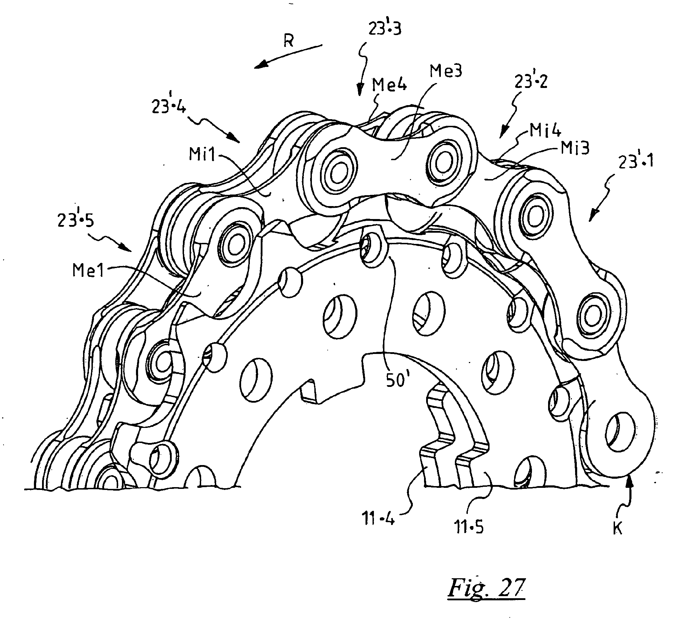

The first gearshifting condition is illustrated hereafter with reference to Figs. 26 and 27.

The outer link Me1 of the chain K makes contact with the area 20' of the peripheral portion 17 below the tooth 23'.5 and rests upon its first outer bevelling 41'. The second outer bevelling 43' of the tooth 23'.5 makes the outer link Me1 of the chain K slide, preventing it engaging with the tooth 23'.5 itself. The outer link Me1 also makes contact with the tooth 23'.4 and rests upon its second outer bevelling 42' whereas the inner link Mi1 makes contact with its first outer bevelling 40'. The inner link Mi1 is positioned with its final part above the support zone 27 of the tooth 23'.3 in a slightly raised position.

The tooth 23'.2 is engaged by the portion of chain K formed by the two inner links Mi3 and Mi4 and the inner link Mi3 rests upon the inner bevelling 47' of the tooth 23'.2.

From such a condition, after a slight rotation of the sprocket assembly 10, the outer link Me3 slides on the inner side 19 of the tooth 23'.3 at its inner bevelling 45' and the portion of chain K consisting of the outer links Me3 and Me4 from the slightly raised position descends to completely engage the tooth 23'.3.

The fifth specialised tooth 23'.1 is not substantially involved in this gearshifting.

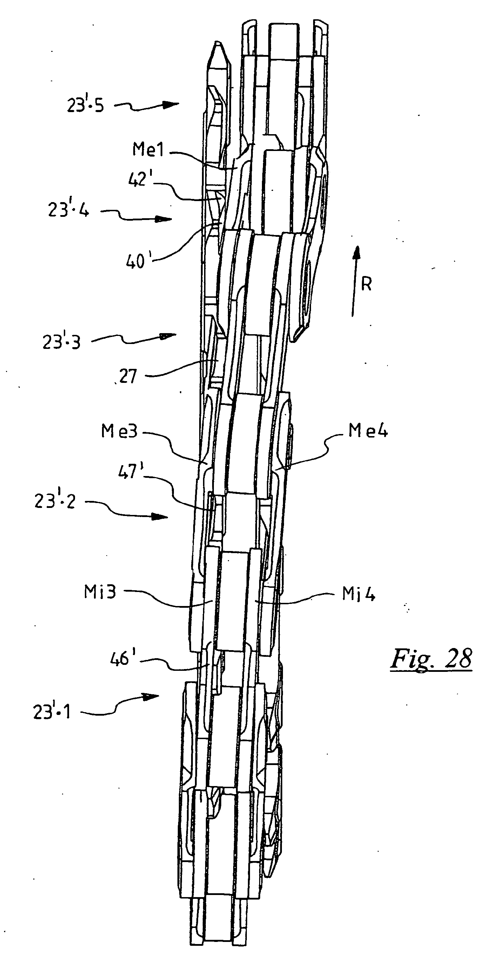

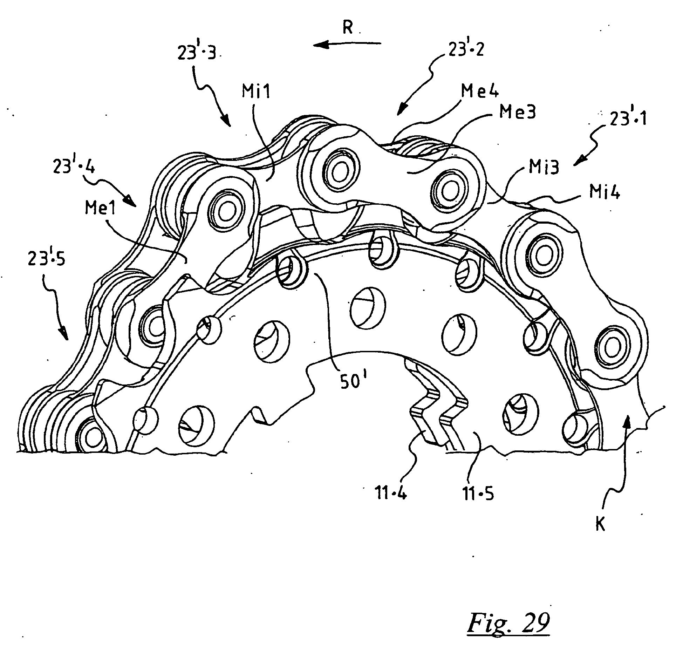

The second gearshifting condition is illustrated hereafter with reference to Figs. 28 and 29.

The outer link Me1 of the chain K makes contact with the area 20' of the peripheral portion 17 below the tooth 23'.4 and rests upon its first outer bevelling 40'. The second outer bevelling 42' of the tooth 23'.4 makes the outer link Me1 of the chain K slide, preventing it engaging with the tooth 23'.4. The outer link Me1 also makes contact with the tooth 23'.3 and is positioned near to the support zone 27 of the tooth 23'.3 in a slightly raised position. The tooth 23'.2 is engaged by the portion of chain K formed by the two outer links Me3 and Me4 and the outer link Me3 rests upon the inner bevelling 47' of the tooth 23'.2.

The tooth 23'.1 is engaged by the portion of chain K consisting of the two inner links Mi3 and Mi4 and the inner link Mi3 rests upon the inner bevelling 46' of the tooth 23'.1.

The fifth specialised tooth 23'.5 is not substantially involved in this gearshifting.

The present invention, of course, can be implemented in different ways to those exemplified in this description. For example, it is possible to apply it to pairs of toothed wheels having skip three, i.e. with a difference of three teeth between the two adjacent wheels; in such a case, three angular sectors of specialised teeth for upward gearshifting shall be defined on the toothed wheel of greater diameter. Moreover, as already stated previously, the invention is applicable not only to groups of toothed wheels formed by sprockets of a rear gearshift, but also to groups of toothed wheels formed by crowns of a front gearshift.

## Claims

1. Toothed wheel for a bicycle drivetrain, having a flat shape between two opposite sides (18, 19), with a central portion (16) surrounded by a peripheral portion (17), in which the peripheral portion (17) comprises a plurality of teeth (23; 23') intended for engagement with a chain (K) of the bicycle drivetrain, said peripheral portion (17) comprising at least a sector (B, D) of neutral teeth that are not specialized for gearshifting, said toothed wheel comprising at least one side projection (30, 30a; 30b; 130) on at least one of the neutral teeth (23; 23'), projecting with respect to at least one of said sides (18, 19) **characterised in that** said at least one side projection (30, 30a; 30b; 130) provides guide for the chain (K) and stability of the coupling between chain (K) and toothed wheel and the number of neutral teeth (23; 23') at which said at least one projection (30, 30a; 30b; 130) is provided is less than the total number of teeth (23; 23') of the wheel (11).

2. Toothed wheel according to claim 1, intended to form part of a group (10) of adjacent toothed wheels (11), in which the sides comprise an outer side (18), intended to face towards a toothed wheel (11) of smaller diameter or else to define the group (10) of toothed wheels (11) towards the outside, and an inner side (19), intended to face towards a toothed wheel (11) of greater diameter or else to define the group (10) of toothed wheels (11) towards the inside, in which said at least one projection (30, 30a; 30b; 130) projects from the outer side (18).

3. Toothed wheel according to claim 1, wherein at each tooth (23; 23') at most one said projection is provided.

4. Toothed wheel according to claim 1, wherein each said at least one projection (30, 30a; 30b; 130) is obtained through displacement of material of the peripheral portion (17) of the toothed wheel (11).

5. Toothed wheel according to claim 4, wherein the displacement of material is obtained by coining, embossing or similar.

6. Toothed wheel according to claim 1, comprising a through opening (33) at said at least one projection (30, 30a; 30b).

7. Toothed wheel according to claim 6, wherein the through opening is a circular cylindrical hole (33), having its axis parallel to the axis of the toothed wheel (11).

8. Toothed wheel according to claim 6 or 7, wherein said at least one projection (30, 30a; 30b) is obtained by coining, embossing or similar together with said opening (33).

9. Toothed wheel according to claim 1, wherein said at least one projection (30, 30a; 30b; 130) has an elongated shape, with a greater extension in the radial direction than the extension in the circumferential direction.

10. Toothed wheel according to claim 9, wherein said at least one projection (30, 30a; 30b) comprises a first radially inner portion (34), a second radially outer portion (35) having a smaller circumferential size than the radially inner portion (34), and a through hole (33) formed in the radially inner portion (34), said hole (33) having a circular cylindrical shape with its axis parallel to the axis of the toothed wheel (11).

11. Toothed wheel according to claim 1, wherein said projection (30, 30a; 30b; 130) is fitted to said side (18) of the toothed wheel (11) through a peripheral bevelling (36).

12. Toothed wheel according to claim 1, wherein the entire toothed wheel (11) - both the central portion (16) and the peripheral portion (17), with the exception of said at least one projection (30, 30a; 30b; 130) - is defined on its two sides (18, 19) by two parallel planes (25, 26).

13. Sprocket assembly for a bicycle drivetrain, comprising at least one toothed wheel (11) according to any one of claims 1 to 12.

14. Crankset for a bicycle drivetrain, comprising at least one toothed wheel (11) according to any one of claims 1 to 12.

15. Gearshift group for a bicycle drivetrain, comprising at least one toothed wheel (11) according to any one of claims 1 to 12.

16. Bicycle drivetrain, comprising at least one toothed wheel (11) according to any one of claims 1 to 12.

## Patentansprüche

1. Zahnrad für einen Fahrradantriebsstrang, das eine flache Form zwischen zwei gegenüberliegenden Seiten (18, 19) mit einem zentralen Abschnitt (16) hat, der von einem Umfangsabschnitt (17) umgeben ist, wobei der Umfangsabschnitt (17) eine Vielzahl von Zähnen (23; 23') enthält, die dazu bestimmt sind, mit einer Kette (K) des Fahrradantriebsstranges in Eingriff zu stehen, der Umfangsabschnitt (17) wenigstens einen Sektor (B, D) neutraler Zähne enthält, die nicht für das Gangschalten ausgelegt sind, und das Zahnrad wenigstens einen Seitenvorsprung (30, 30a; 30b, 130) auf wenigstens einem der neutralen Zähne (23; 23') enthält, der im Bezug auf wenigstens eine der Seiten (18, 19) hervorragt; **dadurch gekennzeichnet, dass** der wenigstens eine Seitenvorsprung (30, 30a; 30b; 130) eine Führung für die Kette (K) und eine Stabilität der Kopplung zwischen der Kette (K) und dem Zahnrad bereitstellt und die Anzahl neutraler Zähne (23; 23'), an denen der wenigstens eine Vorsprung (30, 30a; 30b; 130) vorgesehen ist, geringer ist als die Gesamtzahl der Zähne (23; 23') des Rades (11).

2. Zahnrad nach Anspruch 1, das dazu bestimmt ist, einen Teil einer Gruppe (10) benachbarter Zahnräder (11) zu bilden, und bei dem die Seiten eine Außenseite (18), die dazu bestimmt ist, einem Zahnrad (11) eines kleineren Durchmessers zugewandt zu sein oder andernfalls die Gruppe (10) von Zahnrädern (11) hin zu der Außenseite zu bilden, und eine Innenseite (19) enthalten, die dazu bestimmt ist, einem Zahnrad (11) eines größeren Durchmessers zugewandt zu sein oder andernfalls die Gruppe (10) von Zahnrädern (11) hin zu der Innenseite zu bilden, wobei der wenigstens eine Vorsprung (30, 30a; 30b; 130) von der Außenseite (18) hervorragt.

3. Zahnrad nach Anspruch 1, bei dem an jedem Zahn (23; 23') höchstens ein Vorsprung vorgesehen ist.

4. Zahnrad nach Anspruch 1, bei dem jeder wenigstens eine Vorsprung (30, 30a; 30b; 130) durch eine Verschiebung von Material des Umfangsabschnittes (17) des Zahnrades (11) erzeugt ist.

5. Zahnrad nach Anspruch 4, bei dem die Verschiebung von Material durch Prägen, Stanzen oder dergleichen erzeugt ist.

6. Zahnrad nach Anspruch 1, enthaltend eine Durchgangsöffnung (33) an dem wenigstens einen Vorsprung (30, 30a; 30b).

7. Zahnrad nach Anspruch 6, bei dem die Durchgangsöffnung ein kreisförmiges, zylindrisches Loch (33) ist, dessen Achse parallel zu der Achse des Zahnrades (11) ist.

8. Zahnrad nach Anspruch 6 oder 7, bei dem der wenigstens eine Vorsprung (30, 30a; 30b) durch Prägen, Stanzen oder dergleichen zusammen mit der Öffnung (33) erzeugt ist.

9. Zahnrad nach Anspruch 1, bei dem der wenigstens eine Vorsprung (30, 30a; 30b; 130) eine längliche Form mit einer größeren Ausdehnung in der radialen Richtung als die Ausdehnung in der Umfangsrichtung hat.

10. Zahnrad nach Anspruch 9, bei dem der wenigstens eine Vorsprung (30, 30a; 30b) einen ersten radial inneren Abschnitt (34), einen zweiten radial äußeren Abschnitt (35), der eine geringere Umfangsgröße als der radial innere Abschnitt (34) hat, und ein Durchgangsloch (33) aufweist, das in dem radial inneren Abschnitt (34) ausgebildet ist, wobei dieses Loch eine kreisförmige, zylindrische Form hat, dessen Achse parallel zu der Achse das Zahnrades (11) ist.

11. Zahnrad nach Anspruch 1, bei dem der Vorsprung (30, 30a; 30b; 130) an die Seite (18) des Zahnrades (11) durch eine in Umfangsrichtung verlaufende Fase (36) angepasst ist.

12. Zahnrad nach Anspruch 1, wobei das gesamte Zahnrad (11) - sowohl der zentrale Abschnitt (16) als auch der Umfangsabschnitt (17), mit Ausnahme des wenigstens einen Vorsprungs (30, 30a; 30b; 130) - auf seinen beiden Seiten (18, 19) durch zwei parallele Ebenen (25, 26) definiert ist.

13. Ritzelanordnung für einen Fahrradantriebsstrang, enthaltend wenigstens ein Zahnrad (11) nach einem der Ansprüche 1 bis 12.

14. Kurbelsatz für einen Fahrradantriebsstrang, enthaltend wenigstens ein Zahnrad (11) nach einem der Ansprüche 1 bis 12.

15. Gangschaltgruppe für einen Fahrradantriebsstrang, enthaltend wenigstens ein Zahnrad (11) nach einem der Ansprüche 1 bis 12.

16. Fahrradantriebsstrang, enthaltend wenigstens ein Zahnrad (11) nach einem der Ansprüche 1 bis 12.

## Revendications

1. Roue dentée destinée à une transmission de bicyclette, comportant une forme plate entre deux côtés opposés (18, 19), ayant une partie centrale (16) entourée par une partie périphérique (17), dans laquelle la partie périphérique (17) comprend une pluralité de dents (23 ; 23') destinées à un engrènement avec une chaîne (K) de la transmission de bicyclette, ladite partie périphérique (17) comprenant au moins un secteur (B, D) de dents neutres qui ne sont pas prévues pour un changement de vitesses, ladite roue dentée comprenant au moins une protubérance latérale (30, 30a; 30b ; 130) sur au moins une des dents neutres (23; 23'), dépassant par rapport à au moins un desdits côtés (18, 19), **caractérisée en ce que** ladite au moins une protubérance latérale (30, 30a ; 30b; 130) fournit un guide pour la chaîne (K) et une stabilité de l'accouplement entre la chaîne (K) et la roue dentée et le nombre de dents neutres (23 ; 23') au niveau desquelles ladite au moins une protubérance (30, 30a; 30b; 130) est prévue, est inférieur au nombre total de dents (23; 23') de la roue (11).

2. Roue dentée selon la revendication 1, destinée à former une partie d'un groupe (10) de roues dentées adjacentes (11), dans laquelle les côtés comprennent un côté extérieur (18), destiné à être orienté vers une roue dentée (11) d'un diamètre inférieur ou sinon à définir le groupe (10) de roues dentées (11) vers l'extérieur, et un côté intérieur (19), destiné à être orienté vers une roue dentée (11) d'un diamètre supérieur ou sinon à définir le groupe (10) de roues dentées (11) vers l'intérieur, où ladite au moins une protubérance (30, 30a; 30b; 130) dépasse du côté extérieur (18).

3. Roue dentée selon la revendication 1, dans laquelle au niveau de chaque dent (23 ; 23') au plus une seule dite protubérance est prévue.

4. Roue dentée selon la revendication 1, dans laquelle chaque dite au moins une protubérance (30, 30a ; 30b ; 130) est obtenue par le déplacement d'un matériau de la partie périphérique (17) de la roue dentée (11).

5. Roue dentée selon la revendication 4, dans laquelle le déplacement d'un matériau est obtenu par frappe, par emboutissage ou par un procédé similaire.

6. Roue dentée selon la revendication 1, comprenant une ouverture traversante (33) au niveau de ladite au moins une protubérance (30, 30a ; 30b).

7. Roue dentée selon la revendication 6, dans laquelle l'ouverture traversante est un trou cylindrique circulaire (33), ayant son axe parallèle à l'axe de la roue dentée (11).

8. Roue dentée selon la revendication 6 ou 7, dans laquelle ladite au moins une protubérance (30, 30a ; 30b) est obtenue par frappe, par emboutissage ou par un procédé similaire en même temps que ladite ouverture (33).

9. Roue dentée selon la revendication 1, dans laquelle ladite au moins une protubérance (30, 30a; 30b ; 130) présente une forme allongée, ayant une extension supérieure dans la direction radiale à l'extension dans la direction circonférentielle.

10. Roue dentée selon la revendication 9, dans laquelle ladite au moins une protubérance (30, 30a ; 30b) comprend une première partie radialement intérieure (34), une deuxième partie radialement extérieure (35) présentant une dimension circonférentielle inférieure à celle de la partie radialement intérieure (34), et un trou traversant (33) ménagé dans la partie radialement intérieure (34), ledit trou (33) présentant une forme cylindrique circulaire ayant son axe parallèle à l'axe de la roue dentée (11).

11. Roue dentée selon la revendication 1, dans laquelle ladite protubérance (30, 30a ; 30b; 130) est adaptée audit côté (18) de la roue dentée (11) par l'intermédiaire d'un chanfreinage périphérique (36).

12. Roue dentée selon la revendication 1, où toute la roue dentée (11), à la fois la partie centrale (16) et la partie périphérique (17), à l'exception de ladite au moins une protubérance (30, 30a; 30b ; 130), est définie sur ses deux côtés (18, 19) par deux plans parallèles (25, 26).

13. Ensemble de pignon destiné à une transmission de bicyclette, comprenant au moins une roue dentée (11) selon l'une quelconque des revendications 1 à 12.

14. Pédalier destiné à une transmission de bicyclette, comprenant au moins une roue dentée (11) selon l'une quelconque des revendications 1 à 12.

15. Groupe de changement de vitesses destiné à une transmission de bicyclette, comprenant au moins une roue dentée (11) selon l'une quelconque des revendications 1 à 12.

16. Transmission de bicyclette, comprenant au moins une roue dentée (11) selon l'une quelconque des revendications 1 à 12.
